# EUROPEAN PATENT SPECIFICATION

(11) **EP 3 683 650 B1**
(45) Date of publication and mention of the grant of the patent: **01.12.2021**
(21) Application number: 18856783.8
(22) Date of filing: 28.08.2018
(51) Int. Cl.: H04M 1/02, G06F 1/16, H04M 1/67, H04M 1/18

(54) **DISPLAY SCREEN ASSEMBLY AND MOBILE TERMINAL**
ANZEIGEBILDSCHIRMANORDNUNG UND MOBILES ENDGERÄT
ENSEMBLE ÉCRAN D'AFFICHAGE ET TERMINAL MOBILE

(30) Priority: 14.09.2017 CN 201710826480
(43) Date of publication of application: 22.07.2020
(73) Proprietor: Vivo Mobile Communication Co., Ltd., Dongguan, Guangdong 523860 (CN)
(72) Inventor: WEI, Hongyang, Dongguan Guangdong 523860 (CN)
(74) Representative: Conti, Marco
(86) International application number: PCT/CN2018/102697
(87) International publication number: WO 2019/052332

(56) References cited:
- CN-A- 104 869 749
- CN-A- 105 373 778
- CN-A- 105 825 165
- CN-A- 106 295 590
- CN-A- 106 817 451
- CN-A- 107 092 310
- CN-A- 107 577 278
- CN-U- 204 926 117
- CN-U- 206 209 652
- CN-U- 206 209 652
- CN-U- 206 332 939
- US-A1- 2007 067 640
- US-A1- 2012 019 715

## Description

### TECHNICAL FIELD

The present disclosure relates to the field of communication technologies, in particular to a display screen assembly and a mobile terminal.

### BACKGROUND

With the continuous development of technologies, a display screen of a mobile terminal, such as smart phone, is getting larger and larger, and a full-screen mobile terminal has become a development trend. In a full-screen mobile terminal, a conventional structure for fingerprint identification is no longer applicable, and a display screen with a fingerprint identification function has become a new technological direction.

In the related art, the display screen with the fingerprint identification function is generally manufactured by stacking a fingerprint module on a back side of the display screen. For example, the fingerprint module is adhered to the back side of the display screen by using a foam adhesive, a shadowless glue or the like, then a circuit board of the fingerprint module is connected to the circuit board of the display screen and finally connected to a motherboard of the mobile terminal for communication. However, since the fingerprint module itself occupies a large space, if the fingerprint module is designed to be stacked on the back side of the display screen, the overall design of the mobile terminal could be adversely affected. It can be seen that the stacked structure of the display screen and the fingerprint module in the related art has a problem of occupying excessive space.

CN 107092310A relates to a display screen including a light shielding panel and a display panel; the light shielding panel is provided with a hollow-out groove for fixing a fingerprint module therein; the display panel is stacked on a side of the light shielding panel facing a user; an ink layer is provided on a side of the display panel facing the light shielding panel; an orthographic projection area of the ink layer on the light shielding panel covers at least the area except for the hollow-out groove; the chromaticity of the ink layer coincide with the chromaticity of a side of the fingerprint module facing the user.

CN 206209652U relates to a touch display module, including a touch screen, a display screen and a main FPC, in which a touch-control FPC, a display FPC and a fingerprint FPC are integrated on the main FPC.

### SUMMARY

The invention is set out in independent claim 1. Further advantageous features are defined in the dependent claims. The display screen assembly according to the invention includes a display screen, a shock-proof layer and a flexible printed circuit board which are sequentially laminated. The flexible printed circuit board includes a circuit board body and a bent portion extending from the circuit board body toward the display screen; the bent portion is electrically connected to the display screen; a fingerprint chip is arranged on a first surface of the circuit board body; and the circuit board body is electrically connected to the fingerprint chip; the first surface is an end surface of the circuit board body that is facing the display screen; a through hole for accommodating the fingerprint chip is arranged in the shock-proof layer at a position corresponding to the fingerprint chip.

A mobile terminal is provided by some embodiments of the present disclosure. The mobile terminal includes a display screen cover plate and the display screen assembly as described above. The display screen cover plate is snugly attached to the display screen of the display screen assembly.

### BRIEF DESCRIPTION OF THE DRAWINGS

Fig. 1 is a schematic structural view of a display screen assembly snugly fitted with a display screen cover plate according to some embodiments of the present disclosure;
Fig. 2 is a sectional view taken along line A-A in Fig. 1;
Fig. 3 is an exploded view of a display screen assembly snugly fitted with a display screen cover plate according to some embodiments of the present disclosure.

### DETAILED DESCRIPTION

The technical solutions of the embodiments of the present disclosure will be clearly and completely described below in conjunction with the drawings of the embodiments of the present disclosure. It is apparent that the described embodiments are a part of the embodiments of the present disclosure, and not all of them.

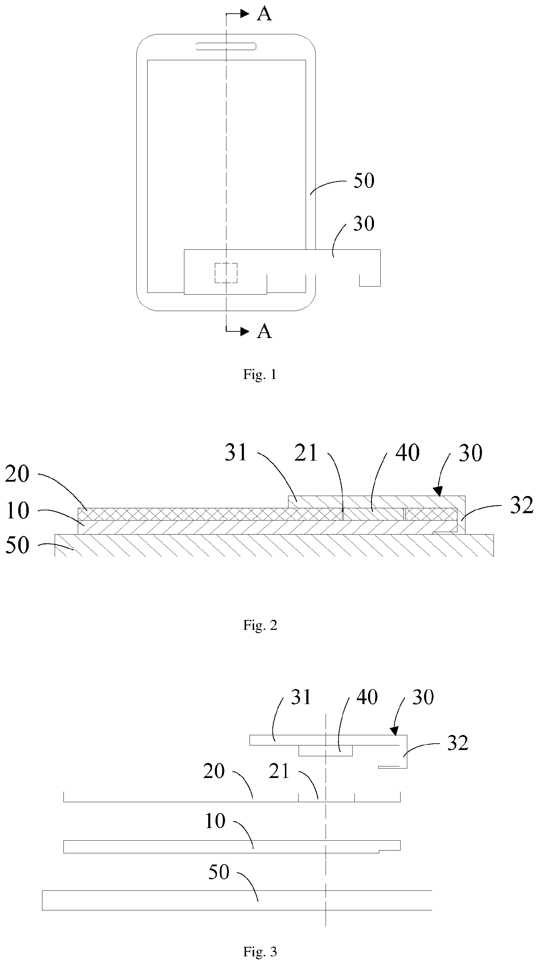

As shown in Figs. 1-3, Fig. 1 is a schematic structural view of a display screen assembly snugly fitted with a display screen cover plate according to some embodiments of the present disclosure; Fig. 2 is a sectional view taken along line A-A in Fig. 1; Fig. 3 is an exploded view of a display screen assembly snugly fitted with a display screen cover plate according to some embodiments of the present disclosure.

As shown in Fig. 1 and Fig. 2, the display screen assembly according to the present invention includes a display screen 10, a shock-proof layer 20 and a flexible printed circuit board 30, which are sequentially laminated. The flexible printed circuit board 30 includes a circuit board body 31 and a bent portion 32 extending from the circuit board body 31 toward the display screen 10; the bent portion 32 is electrically connected to the display screen 10; a fingerprint chip 40 is arranged on a first surface of the circuit board body 31; and the circuit board body 31 is electrically connected to the fingerprint chip 40; the first surface is an end surface of the circuit board body 31 that is facing the display screen 10; a through hole 21 for accommodating the fingerprint chip 40 is arranged in the shock-proof layer 20 at a position corresponding to the fingerprint chip 40.

The display screen assembly further includes a peripheral electronic component configured to enable a fingerprint identification function of the fingerprint chip 40, and the peripheral electronic component is arranged on the circuit board body 31. In this embodiment, the peripheral electronic component may be arranged on a first surface of the circuit board body 31 together with the fingerprint chip 40, or may be arranged on a second surface of the circuit board body 31. The second surface is an end surface of the circuit board body 31 that is away from the display screen 10. Moreover, the peripheral electronic component for controlling and enabling the function of the display screen 10 is generally also arranged on the second surface of the circuit board body 31.

It should be noted that a position of the fingerprint chip 40 on the flexible printed circuit board 30 needs to be designed according to a requirement of an entire mechanical structure of the mobile terminal. For example, if the fingerprint identification function needs to be implemented in a center position of the display screen 10 of the mobile terminal, the fingerprint chip 40 needs to be designed to correspond to the center position of the display screen 10; if the fingerprint identification function needs to be implemented at a lower position of the display screen 10, the fingerprint chip 40 needs to be designed to correspond to the lower position of the display screen 10. As shown in Fig. 1 specifically, in this embodiment, a position of the fingerprint chip 40 in Fig. 1 is determined to be at the lower end of the display screen 10.

In some embodiments of the present disclosure, the fingerprint chip 40, the peripheral electronic component and the circuit structure configured for implementing the fingerprint identification function can be designed to be located on the flexible printed circuit board 30 of the display screen 10, and the fingerprint chip 40, the peripheral electronic component and the circuit structure can be manufactured simultaneously with the flexible printed circuit board 30 of the display screen 10 by means of a surface mount technology (SMT). The fingerprint chip 40, the peripheral electronic component and the circuit structure are all arranged on the circuit board body 31 of the flexible printed circuit board 30. In this way, by integrating the fingerprint chip 40 for implementing the fingerprint identification function on the flexible printed circuit board 30 of the display screen 10 by design, compared with designing the fingerprint module to be stacked on the display screen, the structural design can be greatly simplified, and the occupied space can be saved.

It should be noted additionally that, by placing the fingerprint chip 40 in the through hole 21 of the shock-proof layer 20, not only can the fingerprint chip 40 be effectively protected, but also the problems of the conventional display-screen fingerprint structure, such as complicated stacking, large space occupation and cumbersome interconnections between modules, can be mitigated. In addition, the fingerprint chip 40 may be fixedly connected to the circuit board body 31 by soldering. Compared with fixing the fingerprint module to the display screen by an adhering process in the display-screen fingerprint structure in the related art, a better connection strength is achieved and a risk of the entire mechanical structure in a mechanical test and an environment test can be effectively reduced.

Optionally, in order to improve an identification effect of the fingerprint chip 40, especially in the case that the fingerprint chip 40 is an optical chip, the shock-proof layer 20 may be made of an elastic light-shielding material. For example, the shock-proof layer 20 may be a foam layer having a light-shielding function. The foam has characteristics such as a good elasticity, light weight and reliable performance.

As shown in Figs. 2 and 3, an assembling process of the display screen assembly is as follows: first, the shock-proof layer 20 and the circuit board body 31 can be snugly attached, specifically, which can be realized by sleeving the through hole 21 of the shock-proof layer 20 onto the fingerprint chip 40 arranged on the circuit board body 31; then, the display screen 10 is snugly fitted to a surface of the shock-proof layer 20 that is away from the circuit board body 31, and the bent portion 32 of the flexible printed circuit board 30 enables an electrical connection to the display screen 10.

The through hole 21 and the fingerprint chip 40 also have a positioning function, to facilitate a snug fixation of the shock-proof layer 20 and the circuit board body 31. In the case that the through hole 21 is designed to be a rectangular through hole, the positioning function of the through hole 21 and the fingerprint chip 40 is even better.

It needs to be further noted that, in order to further improve user experience, at least one fingerprint chip 40 may be arranged on the flexible printed circuit board 30. For example, the fingerprint chips 40 may be arranged at both upper and lower ends of a corresponding display screen 10, or the fingerprint chips 40 may be arranged at both left and right sides of a corresponding display screen 10, or the fingerprint chips 40 may be arranged at four corners of a corresponding display screen 10. In the case that at least two fingerprint chips 40 are provided, a user can select to enable the identification function of one or at least two fingerprint chips 40, or select none. The user can make a specific setting according to individual requirement, so as to improve the user experience.

As shown in Fig. 1 and Fig. 2, some embodiments of the present disclosure are further related to a mobile terminal. The mobile terminal includes the display screen cover plate 50 and the display screen assembly as described above. The display screen cover plate 50 is snugly attached to the display screen 10 of the aforementioned display screen assembly.

Optionally, the mobile terminal further includes a motherboard and a board-to-board connector, the flexible printed circuit board 30 of the display screen assembly is electrically connected to the motherboard through the board-to-board connector. Compared with the display-screen fingerprint structure in the related art, in which the circuit board of the fingerprint module needs to be electrically connected to the flexible printed circuit board 30 of the display screen 10 first, and then be connected to the motherboard through a board-to-board connector to perform communication, the display screen assembly provided in some embodiments of the present disclosure realizes the connection and the communication between the flexible printed circuit board 30 and the motherboard by integrating the fingerprint chip 40 with the fingerprint identification function on the flexible printed circuit board 30 of the display screen 10 by design and utilizing the board-to-board connector, so that an installation space of the mobile terminal for installing the fingerprint module can be reduced, additionally, a production yield of the display screen assembly can be improved and a production cost can be reduced.

The mobile terminal may be a mobile phone, a tablet computer, an e-book reader, etc.

It should be noted that, the implementation manner of the embodiments of the display screen assembly is also applicable to the embodiments of the mobile terminal and can achieve the same technical effect, which will not be repeated here.

The above embodiments are merely some embodiments of the present disclosure. It should be noted that improvements and modifications may be made by those skilled in the art without departing from the scope of the appended claims.

## Claims

1. A display screen assembly, comprising: a display screen (10), a shock-proof layer (20) and a flexible printed circuit board (30) sequentially laminated,
wherein the flexible printed circuit board (30) comprises a circuit board body (31) and a bent portion (32) extending from the circuit board body (31) toward the display screen (10), the bent portion (32) being electrically connected to the display screen (10); a fingerprint chip (40) being arranged on a first surface of the circuit board body (31), and the circuit board body (31) being electrically connected to the fingerprint chip (40); the first surface being an end surface of the circuit board body (31) that is facing the display screen (10); and a through hole (21) for accommodating the fingerprint chip (40) being arranged in the shock-proof layer (20) at a position corresponding to the fingerprint chip (40).

2. The display screen assembly according to claim 1, wherein the shock-proof layer (20) is made of an elastic light-shielding material.

3. The display screen assembly according to claim 1, wherein the shock-proof layer (20) is a foam layer.

4. The display screen assembly according to claim 1, further comprising a peripheral electronic component configured to enable a fingerprint identification function of the fingerprint chip (40), wherein the peripheral electronic component and a circuit structure are arranged on the circuit board body (31).

5. The display screen assembly according to claim 4, wherein the peripheral electronic component and the circuit structure are located on a second surface of the circuit board body (31), the second surface being an end surface of the circuit board body (31) that is away from the display screen (10).

6. The display screen assembly according to any one of claims 1 to 5, wherein the fingerprint chip (40) is electrically connected to the circuit board body (31) by means of soldering.

7. The display screen assembly according to any one of claims 1 to 5, wherein the through hole (21) is a rectangular through hole.

8. The display screen assembly according to claim 4, wherein the peripheral electronic component and the circuit structure are located on the same surface of the circuit board body (31) as a peripheral electronic component configured to enable a display function.

9. The display screen assembly according to claim 1, wherein the shape of the through hole (21) matches with the shape of the fingerprint chip (40).

10. The display screen assembly according to claim 1, wherein a quantity of the fingerprint chip (40) is at least two.

11. The display screen assembly according to claim 10, wherein the at least two fingerprint chips (40) are disposed respectively at upper and lower ends of the display screen (10), or disposed respectively at left and right sides of the display screen (10), or disposed respectively at four corners of the display screen (10).

12. The display screen assembly according to claim 10, wherein a fingerprint identification function of each of the at least two fingerprint chips (40) is enabled by a user selectively.

13. A mobile terminal, comprising a display screen cover plate (50) and the display screen assembly according to any one of claims 1 to 12, wherein the display screen cover plate (50) is snugly attached to the display screen (10) of the display screen assembly.

14. The mobile terminal according to claim 13, wherein the mobile terminal further comprises a motherboard and a board-to-board connector, wherein a circuit board of the display screen assembly is electrically connected to the motherboard through the board-to-board connector.

15. The mobile terminal according to claim 13 or 14, wherein the mobile terminal is a mobile phone, a tablet computer or an e-book reader.

## Patentansprüche

1. Anzeigebildschirmanordnung, umfassend: einen Anzeigebildschirm (10), eine stoßfeste Schicht (20) und eine flexible Leiterplatte (30), die sequentiell laminiert sind,
wobei die flexible Leiterplatte (30) einen Leiterplattenkörper (31) und einen gebogenen Abschnitt (32), der sich vom Leiterplattenkörper (31) in Richtung des Anzeigebildschirms (10) erstreckt, umfasst, wobei der gebogene Abschnitt (32) elektrisch mit dem Anzeigebildschirm (10) verbunden ist; wobei ein Fingerabdruckchip (40) auf einer ersten Oberfläche des Leiterplattenkörpers (31) angeordnet ist, und der Leiterplattenkörper (31) elektrisch mit dem Fingerabdruckchip (40) verbunden ist; wobei die erste Oberfläche eine Endoberfläche des Leiterplattenkörpers (31) ist, die dem Anzeigebildschirm (10) zugewandt ist; und wobei ein Durchgangsloch (21) zum Aufnehmen des Fingerabdruckchips (40) in der stoßfesten Schicht (20) an einer dem Fingerabdruckchip (40) entsprechenden Position angeordnet ist.

2. Anzeigebildschirmanordnung nach Anspruch 1, wobei die stoßfeste Schicht (20) aus einem elastischen lichtabschirmenden Material besteht.

3. Anzeigebildschirmanordnung nach Anspruch 1, wobei die stoßfeste Schicht (20) eine Schaumschicht ist.

4. Anzeigebildschirmanordnung nach Anspruch 1, die ferner eine periphere elektronische Komponente umfasst, die konfiguriert ist, um eine Fingerabdruck-Identifikationsfunktion des Fingerabdruckchips (40) zu ermöglichen, wobei die periphere elektronische Komponente und eine Schaltungsstruktur auf dem Leiterplattenkörper (31) angeordnet sind.

5. Anzeigebildschirmanordnung nach Anspruch 4, wobei sich die periphere elektronische Komponente und die Schaltungsstruktur auf einer zweiten Oberfläche des Leiterplattenkörpers (31) befinden, wobei die zweite Oberfläche eine Endoberfläche des Leiterplattenkörpers (31) ist, die vom Anzeigebildschirm (10) entfernt ist.

6. Anzeigebildschirmanordnung nach einem der Ansprüche 1 bis 5, wobei der Fingerabdruckchip (40) mittels Lötens elektrisch mit dem Leiterplattenkörper (31) verbunden ist.

7. Anzeigebildschirmanordnung nach einem der Ansprüche 1 bis 5, wobei das Durchgangsloch (21) ein rechteckiges Durchgangsloch ist.

8. Anzeigebildschirmanordnung nach Anspruch 4, wobei sich die periphere elektronische Komponente und die Schaltungsstruktur auf derselben Oberfläche wie der Leiterplattenkörper (31) als eine periphere elektronische Komponente befinden, die konfiguriert ist, um eine Anzeigefunktion zu ermöglichen.

9. Anzeigebildschirmanordnung nach Anspruch 1, wobei die Form des Durchgangslochs (21) mit der Form des Fingerabdruckchips (40) übereinstimmt.

10. Anzeigebildschirmanordnung nach Anspruch 1, wobei eine Menge des Fingerabdruckchips (40) mindestens zwei beträgt.

11. Anzeigebildschirmanordnung nach Anspruch 10, wobei die mindestens zwei Fingerabdruckchips (40) jeweils am oberen und unteren Ende des Anzeigebildschirms (10) angeordnet sind oder jeweils an der linken und rechten Seite des Anzeigebildschirms (10) angeordnet sind, oder jeweils an vier Ecken des Anzeigebildschirms (10) angeordnet sind.

12. Anzeigebildschirmanordnung nach Anspruch 10, wobei eine Fingerabdruck-Identifikationsfunktion eines jeden der mindestens zwei Fingerabdruckchips (40) durch einen Benutzer selektiv aktiviert wird.

13. Mobiles Endgerät, umfassend eine Anzeigebildschirmabdeckplatte (50) und die Anzeigebildschirmanordnung nach einem der Ansprüche 1 bis 12, wobei die Anzeigebildschirmabdeckplatte (50) eng am Anzeigebildschirm (10) der Anzeigebildschirmanordnung angebracht ist.

14. Mobiles Endgerät nach Anspruch 13, wobei das mobile Endgerät ferner ein Motherboard und einen Board-to-Board-Verbinder umfasst, wobei eine Leiterplatte der Anzeigebildschirmanordnung elektrisch durch den Board-to-Board-Verbinder mit dem Motherboard verbunden ist.

15. Mobiles Endgerät nach Anspruch 13 oder 14, wobei das mobile Endgerät ein Mobiltelefon, ein Tablet-Computer oder ein E-Book-Reader ist.

## Revendications

1. Ensemble d'écran d'affichage, comprenant : un écran d'affichage (10), une couche antichocs (20) et une carte de circuit imprimé flexible (30) stratifiée de manière séquentielle,
dans lequel la carte de circuit imprimé flexible (30) comprend un corps de carte imprimée (31) et une partie pliée (32) se prolongeant à partir du corps de carte imprimée (31) vers l'écran d'affichage (10), la partie pliée (32) étant connectée électriquement à l'écran d'affichage (10) ; une puce à empreintes digitales (40) étant disposée sur une première surface du corps de carte imprimée (31), et le corps de carte imprimée (31) étant électriquement connecté à la puce à empreintes digitales (40) ; la première surface étant une surface d'extrémité du corps de carte imprimée (31) faisant face à l'écran d'affichage (10) ; et un trou traversant (21) servant à loger la puce à empreintes digitales (40) étant disposé dans la couche antichocs (20) à une position correspondant à la puce à empreintes digitales (40).

2. Ensemble d'écran d'affichage selon la revendication 1, dans lequel la couche antichocs (20) est constituée d'un matériau élastique de protection contre la lumière.

3. Ensemble d'écran d'affichage selon la revendication 1, dans lequel la couche antichocs (20) est une couche de mousse.

4. Ensemble d'écran d'affichage selon la revendication 1, comprenant de plus un composant électronique périphérique configuré pour permettre une fonction d'identification d'empreinte digitale de la puce à empreintes digitales (40), dans lequel le composant électronique périphérique et une structure de circuit sont disposés sur le corps de carte imprimée (31).

5. Ensemble d'écran d'affichage selon la revendication 4, dans lequel le composant électronique périphérique et la structure de circuit sont situés sur une deuxième surface du corps de carte imprimée (31), la deuxième surface étant une surface d'extrémité du corps de carte imprimée (31) étant éloignée de l'écran d'affichage (10) .

6. Ensemble d'écran d'affichage selon l'une quelconque des revendications 1 à 5, dans lequel la puce à empreintes digitales (40) est connectée électriquement au corps de carte imprimée (31) au moyen d'un brasage.

7. Ensemble d'écran d'affichage selon l'une quelconque des revendications 1 à 5, dans lequel le trou traversant (21) est un trou traversant rectangulaire.

8. Ensemble d'écran d'affichage selon la revendication 4, dans lequel le composant électronique périphérique et la structure de circuit sont situés sur la même surface du corps de carte imprimée (31) qu'un composant électronique périphérique configuré pour permettre une fonction d'affichage.

9. Ensemble d'écran d'affichage selon la revendication 1, dans lequel la forme du trou traversant (21) correspond à la forme de la puce à empreintes digitales (40) .

10. Ensemble d'écran d'affichage selon la revendication 1, dans lequel une quantité de puces à empreintes digitales (40) est au moins égale à deux.

11. Ensemble d'écran d'affichage selon la revendication 10, dans lequel les au moins deux puces à empreintes digitales (40) sont disposées respectivement aux extrémités supérieure et inférieure de l'écran d'affichage (10), ou disposées respectivement sur les côtés gauche et droit de l'écran d'affichage (10), ou disposées respectivement aux quatre coins de l'écran d'affichage (10).

12. Ensemble d'écran d'affichage selon la revendication 10, dans lequel une fonction d'identification d'empreinte digitale de chacune des au moins deux puces à empreintes digitales (40) est activée par un utilisateur de manière sélective.

13. Terminal mobile, comprenant une plaque de recouvrement (50) d'écran d'affichage et l'ensemble d'écran d'affichage selon l'une quelconque des revendications 1 à 12, dans lequel la plaque de recouvrement (50) d'écran d'affichage est fixée de manière ajustée à l'écran d'affichage (10) de l'ensemble d'écran d'affichage.

14. Terminal mobile selon la revendication 13, dans lequel le terminal mobile comprend de plus une carte mère et un connecteur carte à carte, dans lequel une carte imprimée de l'ensemble d'écran d'affichage est connectée électriquement à la carte mère par l'intermédiaire du connecteur carte à carte.

15. Terminal mobile selon la revendication 13 ou 14, dans lequel le terminal mobile est un téléphone mobile, une tablette électronique ou une liseuse.
